# EUROPEAN PATENT APPLICATION

(11) **EP 2 040 440 A1**
(43) Date of publication of application: **25.03.2009**
(21) Application number: 08016366.0
(22) Date of filing: 17.09.2008
(51) Int. Cl.: H04M 1/02

(54) **Dual direction opening/closing hinge module and apparatus utilizing the same**

(30) Priority: 18.09.2007 KR 20070094881; 28.08.2008 KR 20080084238
(71) Applicant: P & TEL INC., Seoul 150-958 (KR); Lee, Han Sang, Seoul 135-270 (KR)
(72) Inventor: Lee, Han Sang, Seoul, 135-270 (KR)
(74) Representative: Blodig, Wolfgang

(57) **Abstract**

Disclosed is a dual direction opening/closing hinge module (100) adapted to open or close an apparatus (200) (e.g. cellular phone) having a body and a cover or two bodies (210,220) in a folder type. The hinge module (100) includes a first rotation member (130) having a first rotation shaft (131) to be installed on the first body (210) while being able to rotate in a first direction, and a rotation body (135) formed on a side of the first rotation shaft (131); and a second rotation member (150) having a second rotation shaft (151) installed on the rotation body (135) while being able to rotate in a second direction so that the second body (220) is supported while being able to rotate in the second direction.

## Description

### BACKGROUND OF THE INVENTION

### 1. Field of the invention

The present invention relates to a hinge module and an apparatus utilizing the same. More particularly, the present invention relates to a dual direction opening/closing hinge module adapted to open or close an apparatus (e.g. cellular phone) having a body and a cover or two bodies in a folder type, as well as a dual direction opening/closing apparatus utilizing the same.

### 2. Description of the Prior Art

As generally known in the art, a cellular phone has a body, on which a main substrate, keys, etc. are installed, and a display installed to be folded on or unfolded from the body. The body and display are folded/unfolded with regard to each other in a hinge or slide type by a hinge module or a slide module.

Recently, cellular phones and other apparatuses tend to incorporate more functions, and user demands are becoming complicated and diversified. In this regard, the apparatuses need to be opened/closed either in the upward/downward direction or in the leftward/rightward direction according to their usage.

User convenience will be improved substantially if the user can open/close his/her cellular phone upward/downward for communication and open/close it leftward/rightward to for game playing, DMB watching, or typing, for example.

As such, there is a request for development of a dual direction opening/closing hinge module and a dual direction opening/closing apparatus utilizing the same.

### SUMMARY OF THE INVENTION

Accordingly, the present invention has been made to solve the above-mentioned problems occurring in the prior art, and the present invention provides a dual direction opening/closing hinge module installed between first and second bodies of an apparatus (e.g. cellular phone), the first body of which acts as the main unit, for example, and the second body of which is a display acting as a cover for covering the main unit, for example, so that the second body can be folded/unfolded in two directions with regard to the first body.

The present invention also provides a hinge module adapted to open/close an apparatus in two directions with a small number of components.

The present invention also provides a hinge module having high breaking strength of components, particularly bent parts.

The present invention also provides a dual direction opening/closing hinge module adapted to enable the second body (e.g. cover) of an apparatus (e.g. cellular phone) to move axially.

The present invention also provides an apparatus that can be opened/closed in two directions.

In accordance with an aspect of the present invention, there is provided a dual direction opening/closing hinge module for supporting an apparatus so that a second body of the apparatus can be folded/unfolded in first and second directions with regard to a first body of the apparatus, the dual direction opening/closing hinge module including a first rotation member having a first rotation shaft to be installed on the first body while being able to rotate in the first direction, and a rotation body formed on a side of the first rotation shaft; and a second rotation member having a second rotation shaft installed on the rotation body while being able to rotate in the second direction so that the second body is supported while being able to rotate in the second direction.

The first rotation member may have a support shaft or a second rotation shaft support portion arranged at an angle with regard to the first rotation shaft to support the second rotation shaft while being able to rotate in the second direction, the second rotation member may be rotatably installed on the first rotation member in the first type, that is, the second rotation member is rotatably installed on the support shaft via the second rotation shaft or in the second type, that is, the second rotation member is rotatably installed via the second rotation shaft inserted into the second rotation shaft support portion.

Preferably, the dual direction opening/closing hinge module further includes a first cam having a first cam portion on a surface so that the first cam is coupled to the first rotation shaft while being able to slide and allows the first rotation shaft to rotate; a second cam having a second cam portion engaging with the first cam portion to be coupled to the first rotation shaft so that, when the first rotation shaft rotates, the second cam rotates together with the first rotation shaft and slide the first cam; an elastic member for elastically pushing the first cam or the second cam in such a direction that the first and second cams engage with each other; and a rotation support portion to be installed on the first body, the rotation support portion having a first rotation shaft coupling hole so that the first rotation shaft can be rotatably coupled, a first cam receiving portion for allowing the first cam to slide along the first rotation shaft but not to rotate, and an elastic member receiving recess for receiving the elastic member.

Alternatively, the dual direction opening/closing hinge module further includes a first cam having a first cam portion on a surface so that the first cam is coupled to the first rotation shaft while being able to slide, the first cam rotating together with the first rotation shaft when the first rotation shaft rotates; a second cam having a second cam portion engaging with the first cam portion to be coupled to the first rotation shaft so that the second cam allows the first rotation shaft to rotate and slides the first cam rotating together with the first rotation shaft; an elastic member for elastically pushing the first cam or the second cam in such a direction that the first and second cams engage with each other; and a rotation support portion to be installed on the first body, the rotation support portion having a first rotation shaft coupling hole so that the first rotation shaft can be rotatably coupled, a second cam receiving portion for receiving the second cam so that the second cam is not allowed to rotate, and an elastic member receiving recess for receiving the elastic member.

Alternatively, the dual direction opening/closing hinge module further includes a rotation support portion having a first rotation shaft coupling hole so that the first rotation shaft can be rotatably coupled, a first direction rotation prevention recess is formed on a lateral surface of the rotation support portion, the lateral surface facing the second rotation member, and a first direction rotation constraint protrusion is formed on the second rotation member and is inserted into the first direction rotation prevention recess to prevent the first rotation member from rotating in the first direction when the second rotation member is folded or when the second rotation member is rotated and unfolded in the second direction.

Alternatively, the dual direction opening/closing hinge module further includes a rotation support portion having a first rotation shaft coupling hole so that the first rotation shaft can be rotatably coupled, and a second direction rotation prevention engaging portion is formed either on a first lateral surface of the rotation support portion facing the second rotation member when the first rotation member is rotated and unfolded in the first direction or on a corresponding surface of the second rotation member so that the second direction rotation prevention engaging portion engages with a facing second lateral surface and prevents the second rotation member from rotating in the second direction.

A first direction rotation prevention recess may be formed on a lateral surface of the rotation support portion, the lateral surface facing the second rotation member, a first direction rotation constraint protrusion may be formed on the second rotation member and inserted into the first direction rotation prevention recess to prevent the first rotation member from rotating in the first direction when the second rotation member is rotated and unfolded in the second direction, and the first direction rotation constraint protrusion may be formed as an engaging portion by plane-cutting a side of an annular protrusion protruding from an outer peripheral surface so that when the second rotation member is folded, the engaging portion allows the first rotation member to rotate in the first direction, and when the first rotation member is unfolded in the first direction, the engaging portion engages with the lateral surface of the rotation support portion and prevents the second rotation member from rotating in the second direction.

A compression member may be installed in the first direction rotation prevention recess to compress/contact an outer peripheral surface of the first direction rotation constraint protrusion, a spring may be installed in the first direction rotation prevention recess to elastically support the compression member, and an angle adjustment planar portion may be formed on the outer peripheral surface of the first direction rotation constraint protrusion to make a surface contact with the compression member so that an unfolding angle can be adjusted.

Alternatively, a first direction rotation limitation recess is formed on a lateral surface of the rotation support portion, the lateral surface facing the rotation body, or on a facing surface of the rotation body to limit an angle of the first rotation member rotated and unfolded in the first direction, a first direction engaging protrusion is formed on the facing surface of the rotation body or on the lateral surface to engage with the first direction rotation limitation recess, and
a second direction engaging portion is formed on an outer peripheral surface of the second rotation member to engage with a second direction engaging step formed on the first rotation member to limit an angle of the second rotation member unfolded in the second direction

The second direction engaging step may be a ball elastically supported by a spring installed in a recess formed on the rotation body, and the second direction engaging portion may be a recess formed on both ends of a ball guide portion formed along an outer peripheral surface of the first direction engaging protrusion.

The first direction rotation constraint protrusion and the second direction rotation prevention engaging portion may be installed on an engaging member adapted to attach to/detach from the second rotation shaft, an engaging member mounting recess may be formed on the rotation body, the engaging member may have a shaft coupling hole of a non-circular section, and the engaging member may be coupled to an outer peripheral surface of the second rotation shaft while being rotatably mounted in the engaging member mounting recess.

An axial movement cam portion may be formed on an outer peripheral surface of the second rotation member so that, when the second rotation member is rotated in the second direction, the axial movement cam portion contacts the rotation support portion and pulls the first rotation shaft of the first rotation member by means of an increase in radius, a first rotation shaft rotation prevention portion may be formed on the rotation support portion, and a rotation prevention operation portion may be formed on one of the first rotation shaft or the first or second cam rotating together with the first rotation shaft so that, when the first rotation shaft is pulled and axially moved by the axial movement cam portion, the rotation prevention operation portion is coupled to the first rotation shaft rotation prevention portion to allow the first rotation shaft to axially move and prevent the first rotation shaft from rotating in the first direction while the first rotation member is unfolded in the second direction, the rotation prevention operation portion escaping from the first rotation shaft rotation prevention portion by means of an axial movement of the first rotation shaft returning to an original position due to action of the elastic member when the second rotation member is folded so that the first rotation shaft is allowed to rotate in the first direction when the second rotation member is folded.

Preferably, the rotation prevention operation portion is adapted to rotate together with the first rotation shaft and deviate from the first rotation shaft rotation prevention portion when the first rotation shaft rotates in the first direction while the second rotation member is folded so that the first rotation shaft is prevented from axially moving while the first rotation member is unfolded, and the axial movement cam portion consequently engages with the rotation support portion and prevents the second rotation member from rotating in the second direction.

Preferably, the second rotation member is rotatably installed on the first rotation member in the first type, and the first rotation member is formed by bending an identical metal rod in a first rotation shaft direction and in a second rotation shaft direction to form the first rotation shaft and the support shaft and by integrally forming a plastic rotation body on an outer peripheral surface of a bent region between the first rotation shaft and the support shaft by insert injection molding to obtain a single component.

Alternatively, the second rotation member is rotatably installed on the first rotation member in the second type, the second rotation shaft support portion is formed on the rotation body as a through-hole, and the second rotation shaft is inserted into the second rotation shaft support portion and rotatably installed.

The first direction rotation prevention recess may be formed in one or both positions corresponding to the first direction rotation constraint protrusion when the first rotation member is folded and when the first rotation member is unfolded, respectively.

In accordance with another aspect of the present invention, there is provided a dual direction opening/closing apparatus including a first body; a second body; and a dual direction opening/closing hinge installed between the first and second bodies so that the second body can be folded/unfolded in first and second directions with regard to the first body.

The dual direction opening/closing hinge module according to the present invention is advantageous in that, when the hinge module is applied to an apparatus (e.g. cellular phone), the apparatus can be opened/closed in two directions. However, the hinge module includes a small number of components, which have high strength so that they are not easily broken.

Particularly, the first rotation member consists of a single integrated component so that the bent part has high strength (i.e. it is less likely to malfunction).

The second body (e.g. cover) can be unfolded in the lateral direction after an axial movement. This improves the availability of the first body (e.g. main unit) and diversifies the product.

The present invention can be realized in such a manner that once the second body of a terminal is unfolded in the first direction, it cannot be unfolded in the second direction, or once the second body is unfolded in the second direction, it cannot be unfolded in the first direction.

Alternatively, the second body of the terminal may be easily unfolded in the second direction after it has been unfolded in the first direction, and vice versa.

Furthermore, the second body of the terminal may be unfolded in the second direction either when it is unfolded or when it has been unfolded in the first direction.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view of a dual direction opening/closing hinge module according to the present invention;
FIGs. 2-4 are perspective views of an apparatus equipped with the hinge module shown in FIG. 1, when the second body of the apparatus is folded on the first body, when the second body is unfolded upward, and when the second body is unfolded in the lateral direction, respectively;
FIG. 5 is an exploded perspective view of a dual direction opening/closing hinge module according to the present invention when viewed from the left;
FIG. 6 is an exploded perspective view of the dual direction opening/closing hinge module according to the present invention when viewed from the right;
FIG. 7 is a partially-broken perspective view of the hinge module shown in FIGs. 5 and 6 when assembled;
FIG. 8 is a top view of a dual direction opening/closing hinge module according to another embodiment of the present invention;
FIG. 9 is a top view of the hinge module shown in FIG. 8 when its second rotation member is unfolded;
FIG. 10 is a perspective view of a dual direction opening/closing hinge module having an integrally formed rotation support portion according to an embodiment of the present invention;
FIG. 11 is a partially-broken perspective view of the hinge module shown in FIG. 10 when its first rotation member is rotated and unfolded in the first direction;
FIG. 12 is a partially-broken perspective view of the hinge module shown in FIG. 10 when its first rotation member is rotated and unfolded in the second direction;
FIG. 13 is an assembled perspective view of a dual direction opening/closing hinge module according to another embodiment of the present invention;
FIG. 14 is an assembled perspective view of the hinge module shown in FIG. 13 when viewed in another direction;
FIG. 15 is an exploded perspective view of the dual direction opening/closing hinge module shown in FIG. 13;
FIG. 16 is an exploded perspective view of a dual direction opening/closing hinge module according to an embodiment alternative to that shown in FIG. 13;
FIG. 17 is a perspective view of a dual direction opening/closing hinge module according to another embodiment of the present invention;
FIG. 18 is a sectional view of the hinge module shown in FIG. 17 taken along line I-I;
FIG. 19 is an exploded perspective view of the dual direction opening/closing hinge module shown in FIG. 17;
FIG. 20 is an exploded perspective view of the hinge module shown in FIG. 19 when viewed from the bottom;
FIG. 21 is a perspective view of the dual direction opening/closing hinge module when it is opened in the first direction;
FIG. 22 is a sectional view of the hinge module shown in FIG. 21 taken along line J-J; and
FIG. 23 is a perspective view of the dual direction opening/closing hinge module when it is opened in the second direction.

### DETAILED DESCRIPTION OF THE EXEMPLARY EMBODIMENTS

Hereinafter, an exemplary embodiment of the present invention will be described with reference to the accompanying drawings. In the following description and drawings, the same reference numerals are used to designate the same or similar components, and so repetition of the description on the same or similar components will be omitted.

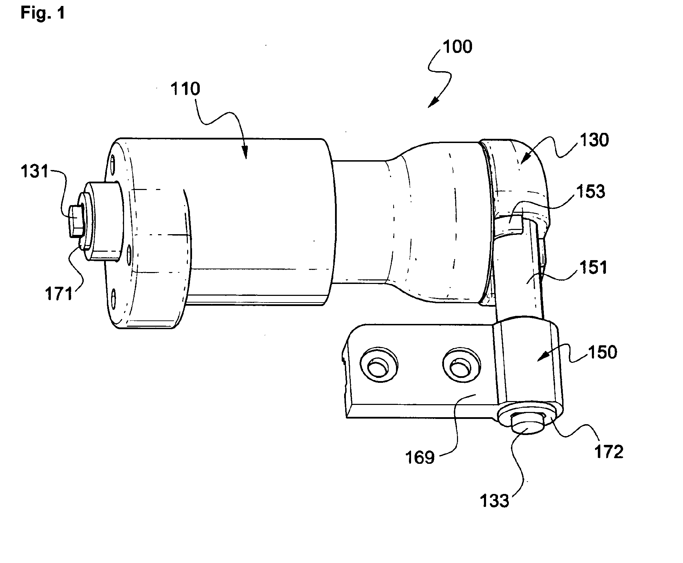

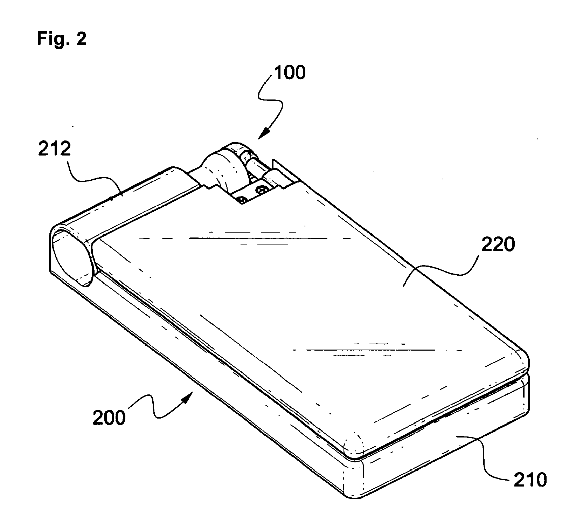

FIG. 1 is a perspective view of a dual direction opening/closing hinge module according to the present invention. FIGs. 2-4 are perspective views of an apparatus equipped with the hinge module shown in FIG. 1, when the second body of the apparatus is folded on the first body, when the second body is unfolded upward, and when the second body is unfolded in the lateral direction, respectively.

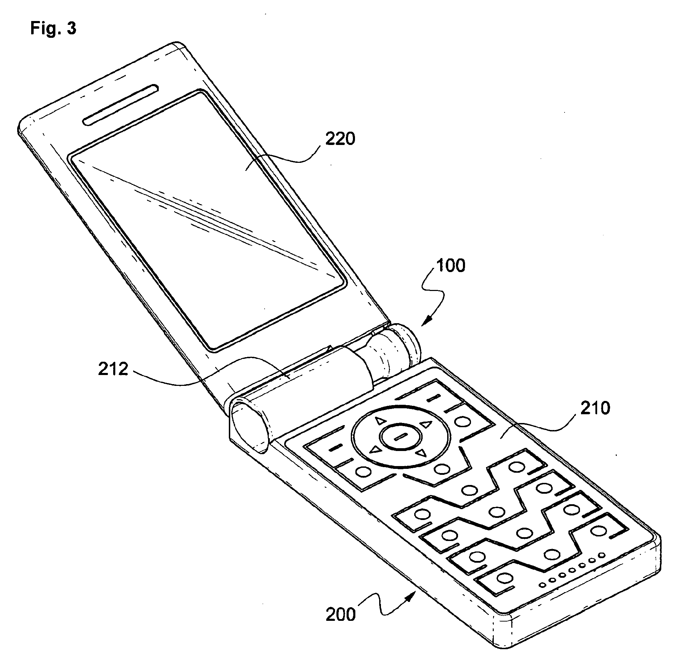

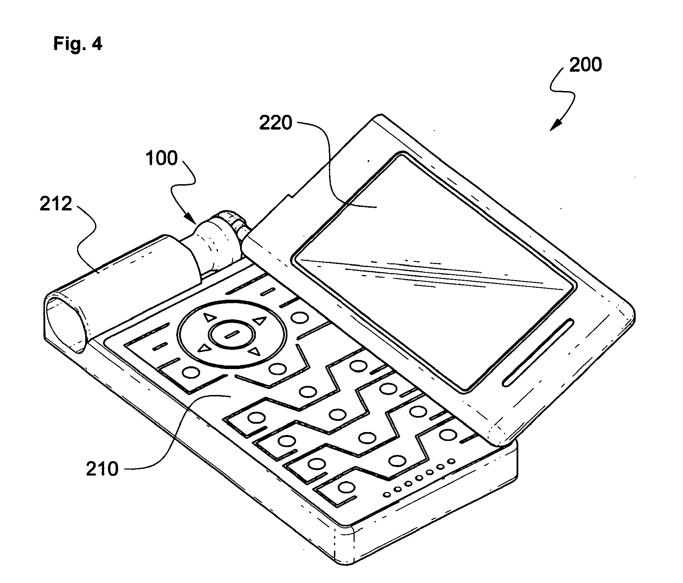

FIG. 1 shows a dual direction opening/closing hinge module 100 according to the present invention. The hinge module 100 is installed between first and second bodies 210 and 220 of an apparatus 200, as shown in FIG. 2. Particularly, the hinge module 100 is installed so that the second body 220 can be folded/unfolded in the first direction (e.g. upward/downward direction as shown in FIG. 3) with regard to the first body 210, and, if necessary, can be folded/unfolded in the second direction (e.g. leftward/rightward direction as shown in FIG. 4).

The hinge module 100 includes a rotation support portion 110 fixed to the first body 210, a first rotation member 130 supported on the rotation support portion 110 and adapted to rotate in the first direction, and a second rotation member 150 installed on the first rotation member 130 and adapted to rotate in the second direction.

The rotation support portion 110 is preferably installed by forming a housing 212 along the upper edge of the first body 210 of the apparatus 200 and placing the rotation support portion 110 into the housing 212.

If necessary, the rotation support portion 110 may be integrally formed on the first body 210 of the apparatus 200.

The first rotation member 130 includes a first rotation shaft 131 inserted into the rotation support portion 110, and a support shaft 133 for supporting the second rotation member 150 and enabling it to rotate in the second direction. Preferably, cams, elastic members, etc. are installed on the first rotation shaft 131 by a detachment prevention ring 171 or a detachment prevention member 171 a, which will be described later in more detail. The support shaft 133 is preferably installed perpendicular to the first rotation shaft 131. However, the support shaft 133 may not be perpendicular if the second body 220 is to be installed at an angle with regard to the first body 210. The support shaft 133 is integrally formed on the first rotation member 130, or is fixed to it by a separate component. If necessary, the support shaft 133 may be omitted.

The second rotation member 150 is installed on the support shaft 133 by a detachment prevention ring 172 and is adapted to rotate in the second direction. The second rotation member 150 includes a hollow second rotation shaft 151 and a connection portion 169 installed on one side of the second rotation shaft 151 to connect to the second body 220. If necessary, the second body 220 is provided with a structure, into which the second rotation shaft 151 can be inserted and fixed, so that the second rotation shaft 151 is directly connected to the second body 220. In this case, the second rotation shaft 151 replaces the connection portion 169. Although it has been assumed that the second rotation shaft 151 is hollow, the second rotation shaft 151 is not hollow if the support shaft 133 needs to be hollow instead. If necessary, the second rotation shaft 151 may be rotatably installed on the rotation member 135 without using the support shaft 133, which will be described later in more detail.

An engaging portion 153 is formed near the upper end of the second rotation member 150 along the outer peripheral surface to limit the angle of rotation in the second direction.

For example, the second body 220 of the apparatus is initially folded as shown in FIG. 2. If the first rotation member 130 is rotated about the first rotation shaft 131 in the first direction, the second body 220 is unfolded upward as shown in FIG. 3. After a rotation in the opposite direction, the second body 220 is again folded.

In addition, if the second rotation member 150 is rotated in the second direction about the second rotation shaft 151, which is coupled to the support shaft 133, the second body 220 of the apparatus is unfolded in the second direction as shown in FIG. 4. After a rotation in the opposite direction, the second body 220 is again folded.

As such, the apparatus 200 equipped with the hinge module 100 according to the present invention is configured so that the second body 220 can be folded/unfolded in either direction.

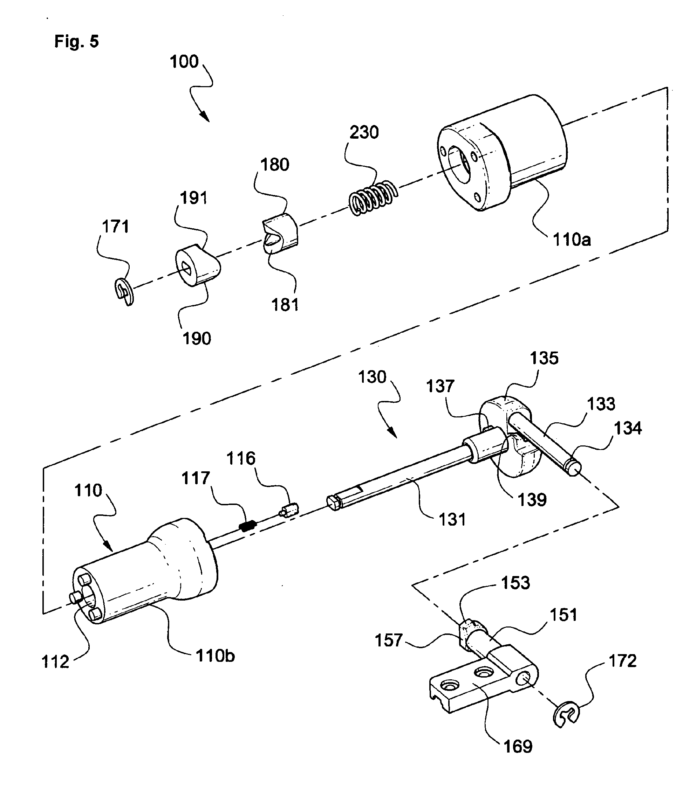

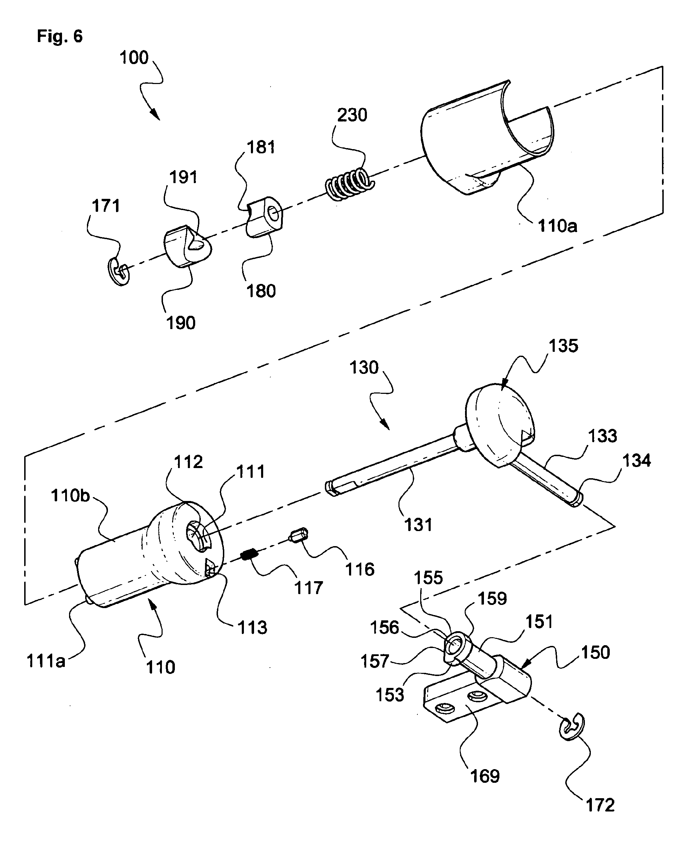

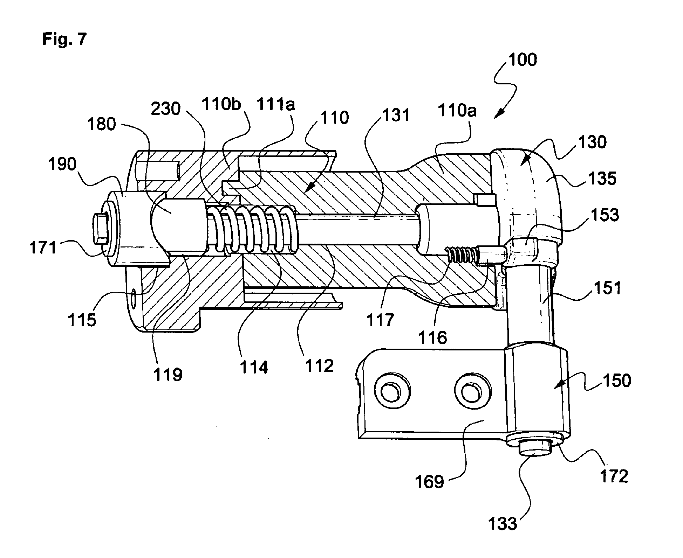

FIG. 5 is an exploded perspective view of a dual direction opening/closing hinge module according to the present invention when viewed from the left. FIG. 6 is an exploded perspective view of the dual direction opening/closing hinge module according to the present invention when viewed from the right. FIG. 7 is a partially-broken perspective view of the hinge module shown in FIGs. 5 and 6 when assembled.

As shown in FIGs. 5-7, the dual direction opening/closing hinge module 100 according to the present invention has a first rotation member 130 so that the hinge module 100 is installed on the first body 210 of the apparatus and adapted to rotate in the first direction. The first rotation member 130 includes a first rotation shaft 131 and a support shaft 133 arranged at an angle with regard to the first rotation shaft 131 to rotatably support the second rotation shaft 151. The first rotation member 130 is preferably formed by bending a metal rod into a desired shape of the first rotation shaft 131 and the support shaft 133 and by integrally forming a rotation body 135 on the outer peripheral surface of the bent portion between the first rotation shaft 131 and the support shaft 133 by insert injection molding, as shown in FIG. 5, to obtain a single component. The first rotation shaft 131 and the support shaft 133 formed in this manner can connect the first and second bodies 210 and 220 firmly without being broken easily. In other words, the second body 220, which is supported by the support shaft 133, may be easily broken by impact if the portion connecting the first rotation shaft 131 and the support shaft 133 is weak.

An engaging protrusion 137 is formed on an inner portion of the rotation body 135, which is formed on the first rotation member 130. The engaging protrusion 137 engages with a rotation limitation recess 111, which is formed on a facing surface of the rotation support portion 110, to limit the angle of the first rotation member 130 rotated and unfolded in the first direction. An engaging step 139 is formed on a portion of the rotation body 135, which faces the support shaft 133, to prevent the second rotation member 150 from rotating beyond a limit.

The second rotation member 150 includes a hollow second rotation shaft 151, which is coupled to the support shaft 133 and adapted to rotate in the second direction, and a connection portion 169 installed on an end of the second rotation shaft 151 to connect to the second body 220. A first direction rotation constraint protrusion 155 is formed on the upper end of the second rotation member 150, and is inserted into the first direction rotation prevention recess 113 to prevent the second rotation member 150 from rotating in the first direction when the second rotation member 150 has been rotated and unfolded in the second direction. In addition, an engaging step 153 is similarly formed on the upper end of the second rotation member 150 to limit rotation in the second rotation direction.

If necessary, the components for constraining rotation in the first and second directions, such as the first direction rotation prevention recess 113, the first direction rotation constraint protrusion 155, the engaging step 153, and the engaging portion 156, may be selectively omitted, and a module is constructed for free opening/closing in either direction. Alternatively, rotation is constrained in only one direction so that opening in the first direction is followed by opening in the second direction, or vice versa. For example, the first direction rotation prevention recess 113 is formed in a position corresponding to the angle of the first rotation member 130 when it is fully unfolded in the first direction so that the second rotation member 150 can unfold in the second direction only after the first rotation member 130 has rotated in the first direction. Alternatively, first direction rotation prevention recesses 113 are formed in both positions corresponding to the angle of the first direction member 130 when it is folded and unfolded, respectively, so that the second rotation member 150 can unfold in the second direction either when the first rotation member 130 is folded or unfolded. Furthermore, the first direction rotation constraint protrusion 155 may initially remain inserted in the first direction rotation prevention recess 113 and then escape if the second rotation member 150 rotates in the second direction so that the first rotation member 130 can rotate in the first direction only after the second rotation member 150 is unfolded in the second direction. The same description can be applied to the following embodiments.

The portion other than the first direction rotation constraint protrusion 155 and the engaging step 153 is formed as a planar cutting surface 157. An angle adjustment planar portion 159 is formed on one side of the engaging step 153 to adjust the unfolding angle. Once the second rotation member 150 is inserted into the support shaft 133, the detachment prevention ring 172, which is coupled to a recess 134 formed on the end of the support shaft 133, prevents the second rotation member 150 from detaching from the support shaft 133.

The first direction rotation constraint protrusion 155 also plays the role of an engaging portion 156. Particularly, when the first rotation member 130 is rotated and unfolded in the first direction, the engaging portion 156 engages with a lateral surface of the rotation support portion 110, which faces the second rotation member 150, and prevents the second rotation member 150 from rotating in the second direction. Alternatively, the engaging portion 156 and the first direction rotation constraint protrusion 155 are separate components.

The engaging portion 156 may be formed on a corresponding surface of the rotation support portion 110 as long as the second rotation member 150 is prevented from rotating in the second direction once the first rotation member 130 is unfolded.

The rotation support portion 110 is installed on the first body, and includes a first rotation shaft coupling hole 112, into which the first rotation shaft 131 is inserted and coupled, a first cam receiving portion 119 adapted to allow the first cam 180 to slide along the first rotation shaft 131 but not to rotate, and an elastic member receiving recess 114 for receiving an elastic member 230. In this case, the second cam 190 may protrude out of the rotation support portion 110. The rotation support portion 110 may be provided with a second cam receiving portion 115, which allows the second cam 190 to rotate.

The rotation support portion 110 includes a first member 110a to be coupled to the first body, and a second member 110b coupled to the first member 110a via a bottom protrusion 111 a so that both members 110a and 110b do not rotate with regard to each other. The first and second members 110a and 10b may be integrally formed to constitute the rotation support portion 110. A rotation limitation recess 111 is formed on a surface of the rotation support portion 110, which faces the first rotation member 130, to limit the angle of rotation of the first rotation member 130 in the first rotation direction. A first direction rotation prevention recess 113 is formed adjacent to the rotation limitation recess 111 so that the first direction rotation constraint protrusion 155, which is formed on the outer peripheral surface of the second rotation member 150, is inserted to prevent the first rotation member 130 from rotating in the first direction once the second rotation member 150 is unfolded. A compression member 116 is coupled to the first direction rotation prevention recess 113 to elastically push and compress the engaging portion 156 of the second rotation member 150, for example. In addition, a spring 117 is coupled to the first direction rotation prevention recess 113 to elastically support the compression member 116.

An elastic member 230, a first cam 180, a second cam 190, and a detachment prevention ring 171 are successively coupled to the first rotation shaft 131. The first cam 180 allows the first rotation shaft 131 to rotate, while the second cam 190 has a hole formed in a non-circular section so that, when the first rotation shaft 131 is coupled to the hole, it is not allowed to rotate. The corresponding portion of the rotation shaft 131 has a non-circular section. The first cam 180 is coupled so that it can slide along the first rotation shaft 131. The non-circular sections coupled to each other may be replaced with a key and a key recess.

Particularly, if the first rotation shaft 131 is rotated, the second cam 190 rotates together with the first rotation shaft 131, and the second cam portion 191 interacts with the first cam portion 181 and pushes away the first cam 180, which then slides backward and returns to the original position by means of force from the elastic member 230.

If necessary, the first cam 180 is coupled to the first rotation shaft 131 and is adapted to slide so that, when the first rotation shaft 131 rotates, the first cam 180 rotates together with it. The second cam 190 is adapted to allow the first rotation shaft 131 to rotate. The first cam receiving portion 119 is adapted to allow the first cam 180 to both slide along the first rotation shaft and rotate. The second cam receiving portion 115 does not allow the second cam 190 to rotate. The position of the elastic member 230 can be varied as long as it can push the cams that can slide.

In this case, if the first rotation shaft 131 rotates, the first cam 180 rotates together with the first rotation shaft 131 and interacts with the second cam 190, the rotation of which is prevented by the second cam receiving portion 115. As a result, the first cam 180 slides back and then returns by means of the elastic member 230.

A first direction rotation prevention recess 113 is formed on a lateral surface of the rotation support portion 110, which faces the second rotation member 150. A first direction rotation constraint protrusion 155 is formed on the second rotation member 150 so that, when the second rotation member 150 is rotated and unfolded in the second direction, the first direction rotation constraint protrusion 155 is inserted into the first direction rotation prevention recess 113 to prevent the first and second rotation member 130 and 150 from rotating in the first direction.

As shown, the first direction prevention constraint protrusion 155 is formed by plane-cutting one side of an annular protrusion, which protrudes from the outer peripheral surface, so that, when the second rotation member 150 is unfolded, the first rotation member 130 is allowed to rotate. When the first rotation member 130 is unfolded, the first direction rotation constraint protrusion 155 engages with the first direction rotation prevention recess 113 and prevents the second rotation member 150 from rotating in the first direction.

A compression member 116 is installed in the first direction rotation prevention recess 113 to compress and contact the outer peripheral surface of the first direction rotation constraint protrusion 155, and a spring 117 is installed in the first direction rotation prevention recess 113 to elastically support the compression member 116. An angle adjustment planar portion 159 is formed on the outer peripheral surface of the first direction rotation constraint protrusion 155 to make a surface contact with the compression member 116 so that the unfolding angle can be adjusted.

An engaging portion 153 is formed on the outer peripheral surface of the second rotation member 150 to limit the angle of the second rotation member 150 unfolded in the second direction. The engaging portion 153 engages with the engaging step 139 of the rotation body 135 of the first rotation member 130 and limits the unfolding angle of the second rotation member 150.

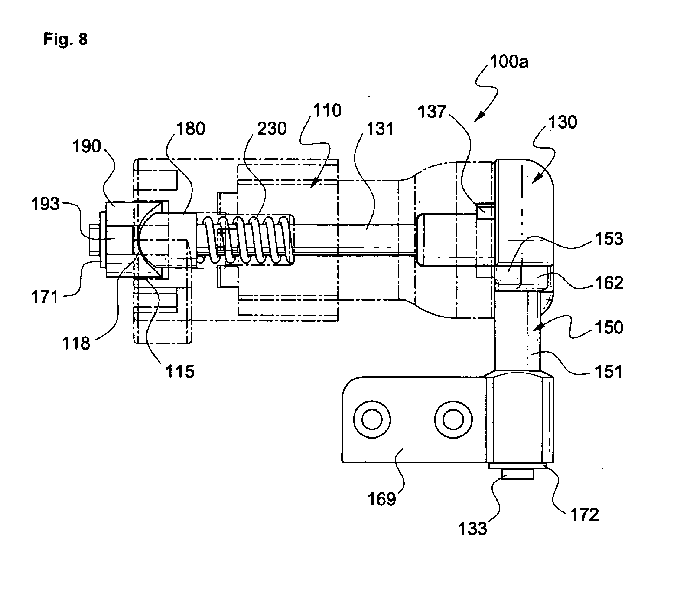

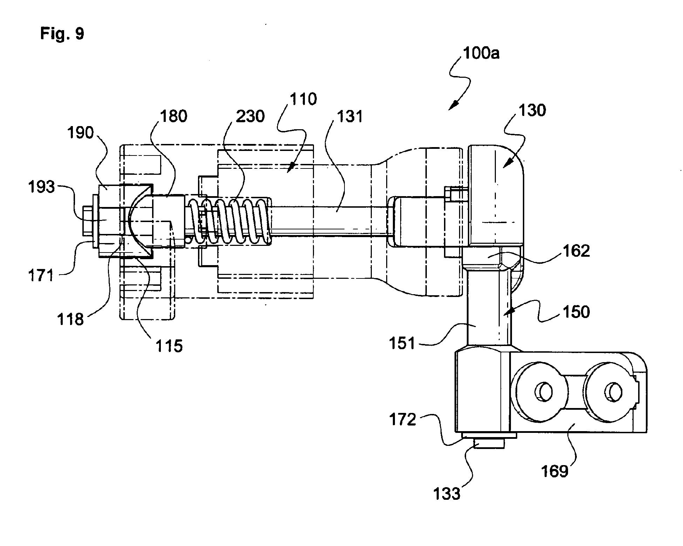

FIG. 8 is a top view of a dual direction opening/closing hinge module according to another embodiment of the present invention, and FIG. 9 is a top view of the hinge module shown in FIG. 8 when its second rotation member is unfolded.

Referring to FIGs. 8 and 9, an axial movement cam portion 162 is formed on the outer peripheral surface of the upper end of the second rotation shaft 151. As the second rotation member 150 rotates in the second direction, the axial movement cam portion 162 makes contact with the lateral surface of the rotation support portion 110 and moves the first rotation shaft 131 of the first rotation member 130 rightward. The radius of the contact region increases in proportion to the angle of rotation.

A first rotation shaft rotation prevention portion 118 is formed on the second cam receiving portion 115 of the rotation support portion 110 in a key recess type.

A key-shaped rotation prevention operation portion 193 is formed on the outer peripheral surface of the second cam 190, and is either coupled to the first rotation shaft rotation prevention portion 118 or released from it according to the position of the first rotation shaft 131. The first rotation shaft rotation prevention portion 118 and the rotation prevention operation portion 193 may switch their shape. Alternatively, the first rotation shaft rotation prevention portion 118 and the rotation prevention operation portion 193 may be formed in the same shape between corresponding regions of the first rotation shaft 131 and the rotation support portion 110, or between inner surfaces of the first cam 180 and the rotation support portion 110.

The first rotation shaft rotation prevention portion 118 and the rotation prevention operation portion 193 are operated as follows: when the first rotation shaft 131 is pulled and moved axially by the axial movement cam portion 162, the rotation prevention operation portion 193 is coupled to the first rotation shaft rotation prevention portion 118 to allow the first rotation shaft 131 to move axially and prevent the first rotation shaft 131 from rotating in the first direction while the second rotation member 150 is unfolded. When the second rotation member 150 is folded, the rotation prevention operation portion 193 escapes from the first rotation shaft rotation prevention portion 118 by means of the axial movement of the first rotation shaft 131, which returns to the original position due to action of the elastic member 230, so that the first rotation shaft 131 is allowed to rotate while the second rotation member 150 is folded.

The rotation prevention operation portion 193 is adapted so that, when the first rotation shaft 131 rotates in the first direction while the second rotation member 150 is folded, the rotation prevention operation portion 193 rotates together with the first rotation shaft 131 and deviates from the first rotation shaft rotation prevention portion 118. This prevents the first rotation shaft 131 from moving axially while the first rotation member 130 is unfolded. As a result, the axial movement cam portion 162 engages with the corresponding lateral surface of the rotation support portion 110 and prevents the second rotation member 150 from rotating in the second direction.

In this case, the compression member 116 and the spring 117 for elastically supporting the compression member 116 according to the previous embodiment are unnecessary.

Other components are the same as those described with regard to the previous embodiment.

A dual direction opening/closing apparatus employing the hinge module 100a shown in FIGs. 8 and 9 is advantageous in that, since the second body moves axially when it is unfolded, a larger area of surface of the first body becomes available.

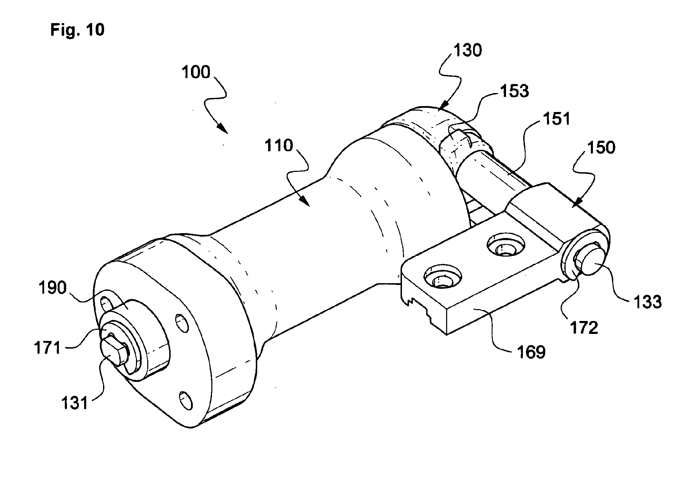

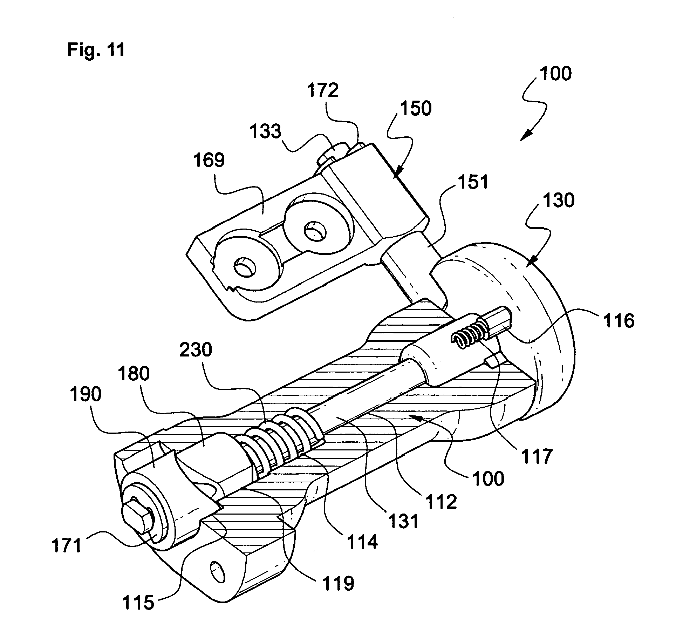

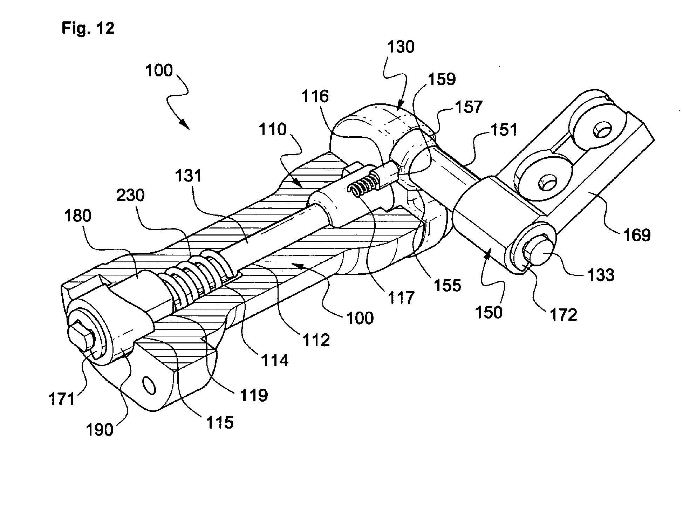

FIG. 10 is a perspective view of a dual direction opening/closing hinge module having an integrally formed rotation support portion according to an embodiment of the present invention. FIG. 11 is a partially-broken perspective view of the hinge module shown in FIG. 10 when its first rotation member is rotated and unfolded in the first direction. FIG. 12 is a partially-broken perspective view of the hinge module shown in FIG. 10 when its second rotation member is rotated and unfolded in the second direction.

As shown in FIGs. 10-12, the rotation support portion 110 may be a single integral member, unlike the previous embodiment.

Referring to FIGs. 10 and 11, as the first rotation member 130 (FIG. 10) is rotated and unfolded in the first direction (FIG. 11), the second rotation member 150 rotates together so that the engaging portion 156 and the first direction rotation constraint protrusion 155 shown in FIG. 6 disengage from the first direction rotation prevention recess 113. As a result, the planar cutting portion 157 is forced against the lateral surface of the rotation support portion 110. Therefore, in the condition shown in FIG. 11, the engaging portion 156 prevents the second rotation member 150 from rotating in the second direction. It can be said that, in this condition, the first cam portion 181 of the first cam 180 has rotated 90-180°. In other words, the first cam portion 181 has moves along the highest portion of the second cam portion 191 until it is compressed by the elastic member 230. As a result, force acts in such a direction that the first rotation member 130 tends to unfold. This prevents the first rotation member 130 from playing once it is fully unfolded.

Referring to FIGs. 10 and 12, if the first rotation member 130 (FIG. 10) is rotated and unfolded in the second direction (FIG. 12), the first direction rotation constraint protrusion 155 of the second rotation member 150 enters into the first direction rotation prevention recess 113 so that, once the second rotation member 150 is unfolded in the second direction, it does not rotate in the first direction. The angle adjustment planar portion 159, which is obtained by plane-cutting a part of the outer peripheral surface of the first direction rotation constraint protrusion 155, is inserted into the first direction rotation prevention recess 113 and makes contact with the compression member 116 so that the angle adjustment planar portion 159 is stably supported at that angle. A number of angle adjustment planar portions 159 may be formed successively.

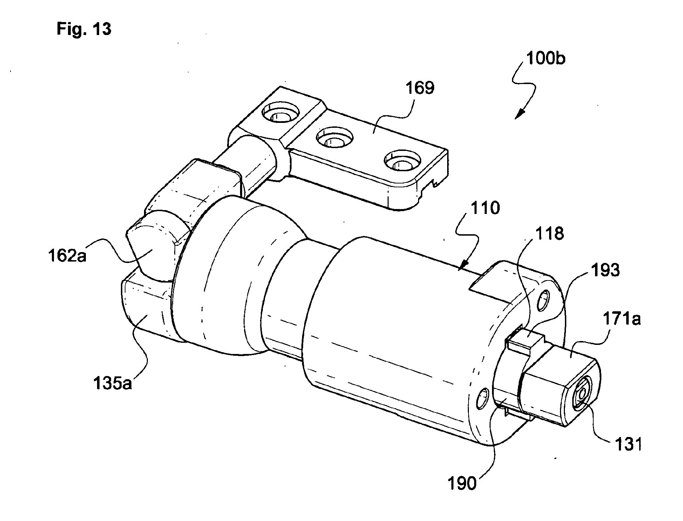

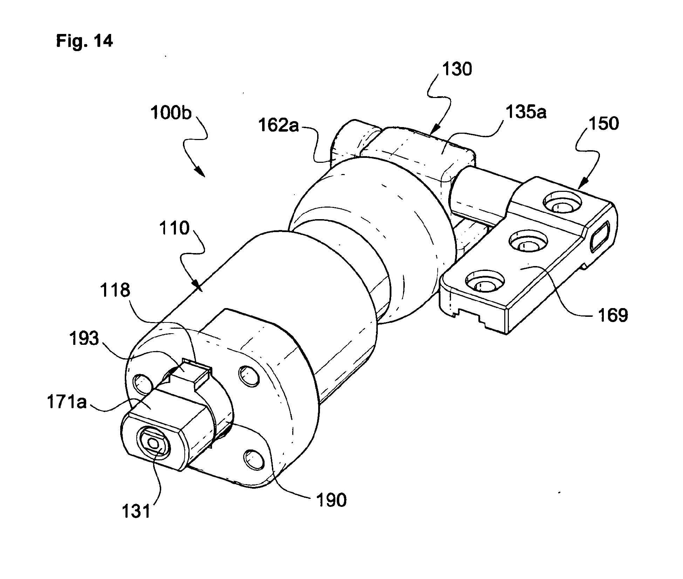

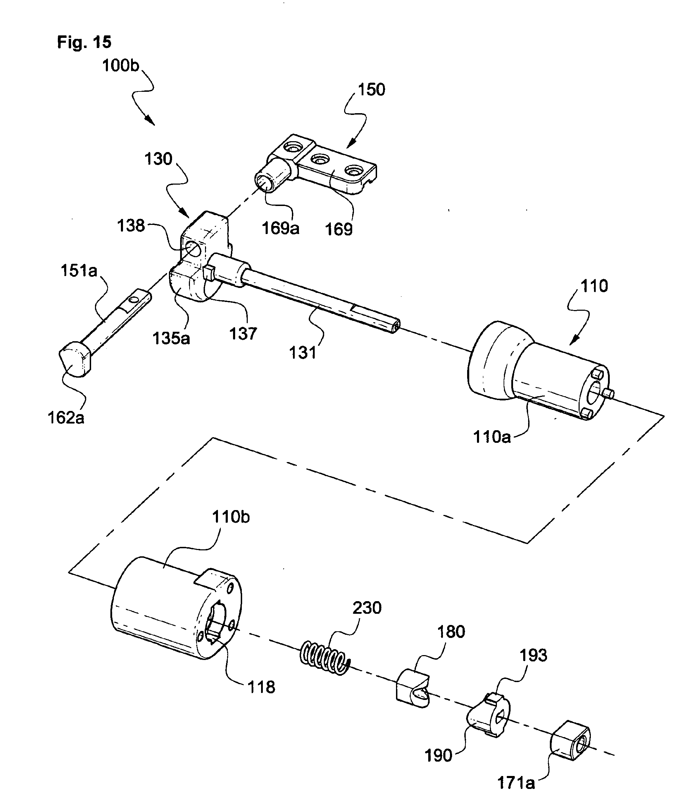

FIG. 13 is an assembled perspective view of a dual direction opening/closing hinge module according to another embodiment of the present invention. FIG. 14 is an assembled perspective view of the hinge module shown in FIG. 13 when viewed in another direction. FIG. 15 is an exploded perspective view of the dual direction opening/closing hinge module shown in FIG. 13.

The rotation support portion 110, the elastic member 230, the first cam 180, and the second cam 190 of the dual direction opening/closing hinge module 100b shown in FIGs. 13-15 are the same as those described with reference to FIGs. 8 and 9, and different components will now be described.

As is clear from FIGs. 13-15, both sides of the upper end of the rotation member 135a of the first rotation member 130 are cut, and a second rotation shaft support portion 138 is formed as a through-hole extending along the second rotation shaft 151 a.

The second rotation member 150 includes a second rotation shaft 151a, which has an axial movement cam portion 162a formed on an end, and a connection portion 169 as separate components. The second rotation shaft 151 a is inserted into one side of the second rotation shaft support portion 138, which lies opposite the connection portion 169, and the portion of the second rotation shaft 151 a, which protrudes from the other side, is coupled to a shaft coupling hole 169a formed on the connection portion 169.

In order to retain components on the first rotation shaft 131 more firmly, the detachment prevention ring 171 according to the previous embodiment may be replaced with a detachment prevention member 171 a, which is coupled to an end of the first rotation shaft 131 by welding or screw coupling and then firmly fixed to the end by pressurizing, for example.

Other components are the same as those described with reference to FIGs. 8 and 9.

The manner of installing the second rotation shaft 151a and the detachment prevention member 171a according to the present embodiment can be similarly applied to the embodiments described with reference to FIGs. 1-7.

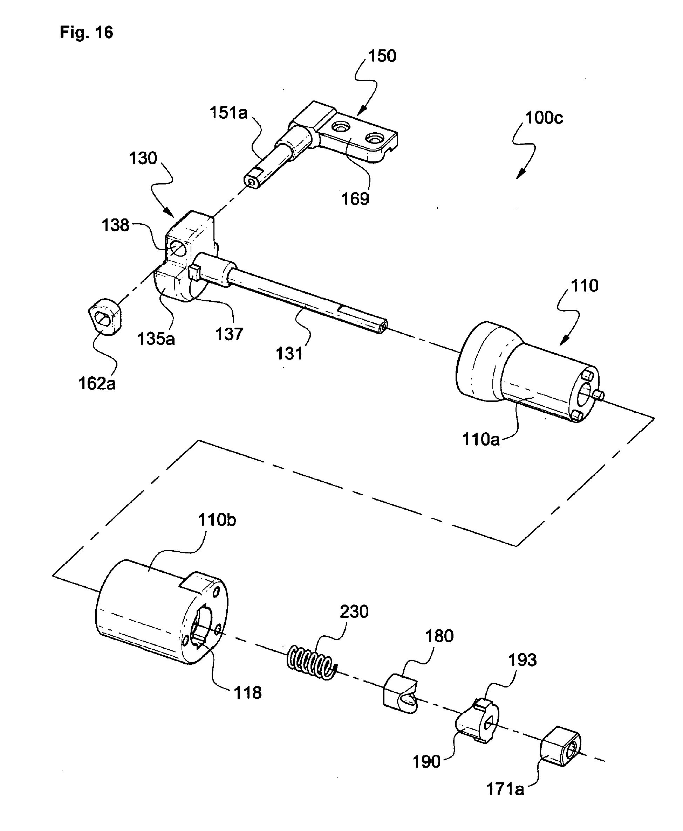

FIG. 16 is an exploded perspective view of a dual direction opening/closing hinge module according to an embodiment alternative to that shown in FIG. 13.

If necessary, the first rotation member 130 has the same construction as described with reference to FIG. 13, and the second rotation member 150 includes a second rotation shaft 151 a and a connection portion 169, which are formed as an integral unit, as well as a separate axial movement cam portion 162. In this case, the second rotation shaft 151a is inserted into the second rotation shaft support portion 138, and the axial movement cam portion 162a is fixed to the part of the second rotation shaft 151 a, which protrudes from the other side, to construct the dual direction opening/closing hinge module 100c according to the present invention. Other components are the same as those described with reference to FIGs. 13-15.

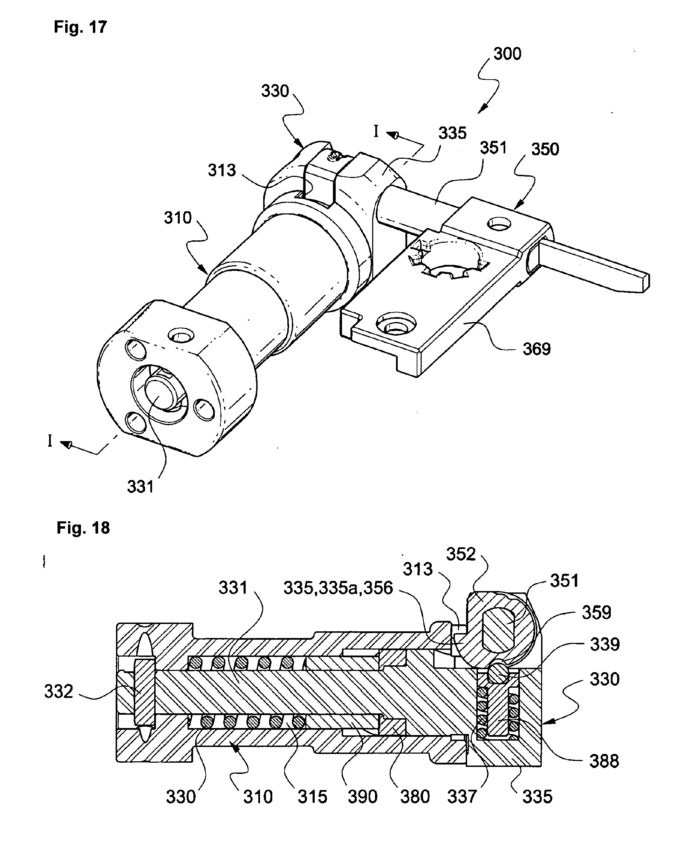

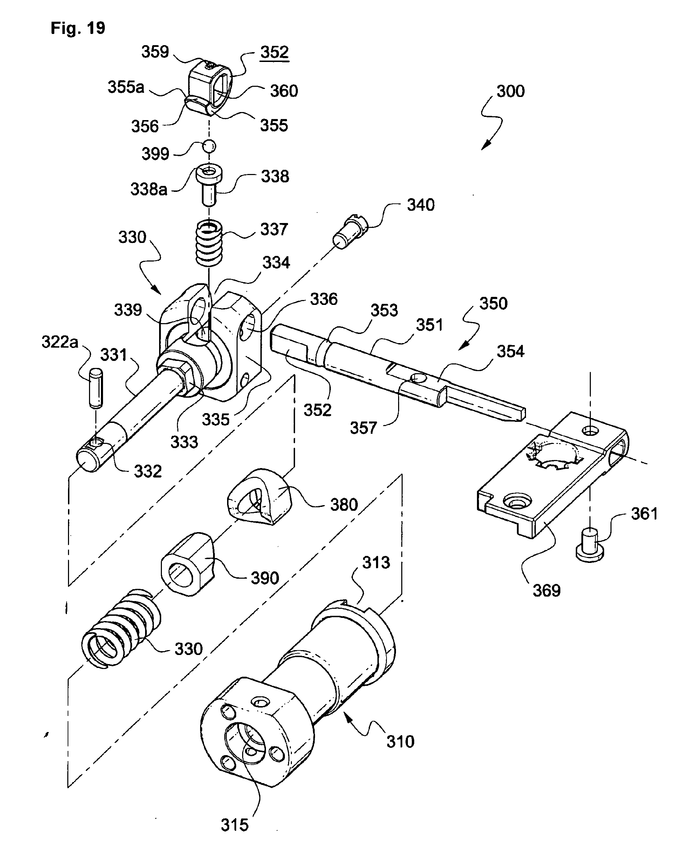

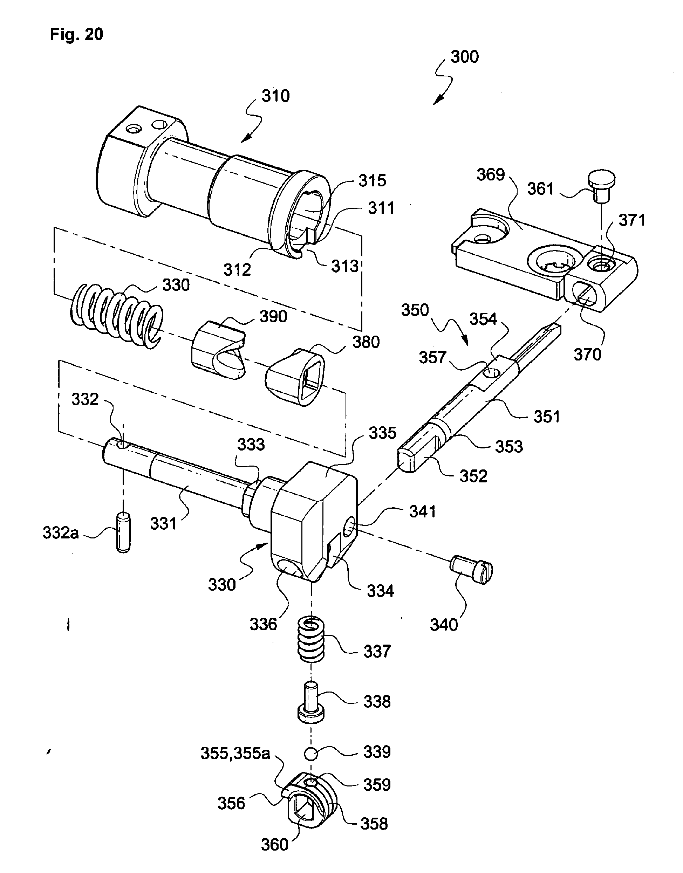

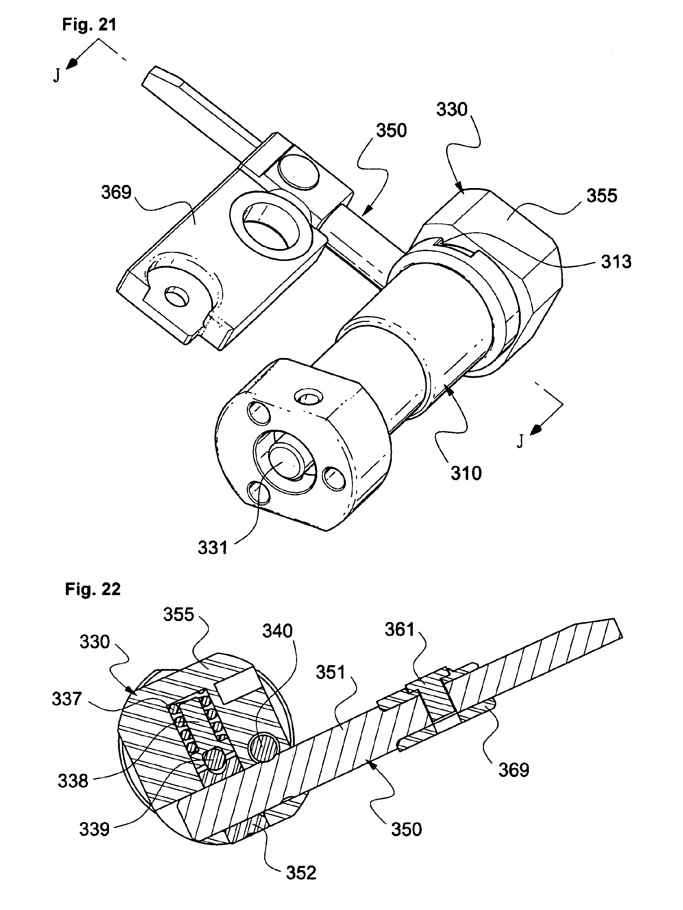

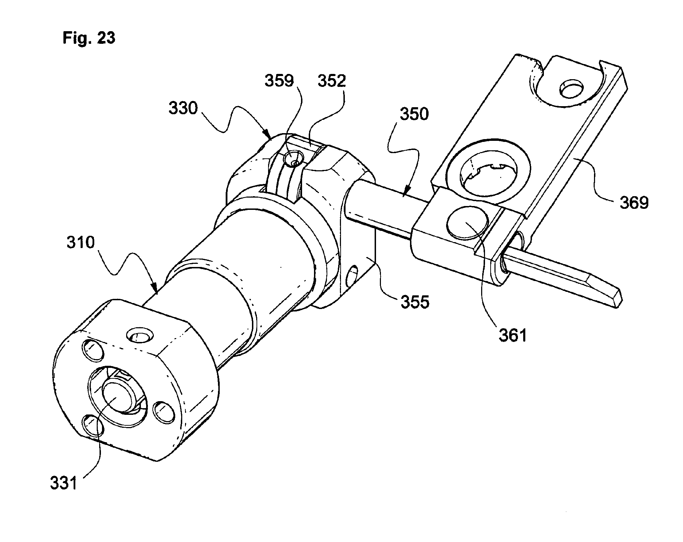

FIG. 17 is a perspective view of a dual direction opening/closing hinge module according to another embodiment of the present invention. FIG. 18 is a sectional view of the hinge module shown in FIG. 17 taken along line I-I. FIG. 19 is an exploded perspective view of the dual direction opening/closing hinge module shown in FIG. 17. FIG. 20 is an exploded perspective view of the hinge module shown in FIG. 19 when viewed from the bottom. FIG. 21 is a perspective view of the dual direction opening/closing hinge module when it is opened in the first direction. FIG. 22 is a sectional view of the hinge module shown in FIG. 21 taken along line J-J. FIG. 23 is a perspective view of the dual direction opening/closing hinge module when it is opened in the second direction.

The dual direction opening/closing hinge module 300 shown in FIGs. 17-23 has a first rotation member 330, which is installed on the first body of an apparatus and adapted to rotate in the first direction. The first rotation member 330 includes a first rotation shaft 331 and a rotation body 335 formed on one end of the first rotation shaft 331. A pin hole 332 is formed on the other end of the first rotation shaft 331 so that a pin 332a is coupled to prevent the first rotation shaft 331 from detaching. A non-circular section portion 333 is formed opposite the pin hole 332 so that a first cam 380 is mounted without being able to rotate. The rotation body 335 has an engaging member mounting recess 334 and a second rotation shaft coupling hole 336 formed thereon. A recess 339 is formed on the engaging member mounting recess 334 so that a spring 337 and a ball support 338 can be inserted. A ball seating recess 338a is formed on the upper surface of the ball support 338 so that a ball 339 is seated on the ball seating recess 338a. A pin hole 341 is formed on the rotation body 335 so that a detachment prevention pin 340 can be coupled in the same direction as the first rotation shaft 331 extends.

The second rotation member 350 includes a second rotation shaft 351, which is coupled to the second rotation shaft coupling hole 336 while being able to rotate in the second direction, and a connection portion 369 installed on an end of the second rotation shaft 351 to connect to the second body.

The second rotation shaft 351 has a non-circular section portion 352 formed on an end so that a ring-shaped engaging member 352 (described later) can be coupled without being able to rotate. An engaging recess 353 is formed adjacent to the non-circular section portion 352 so that, when the second rotation shaft 351 is coupled to the coupling hole 336, it engages with the outer peripheral surface of the pin 340 and is prevented from detaching, but it is allowed to rotate. A connection portion coupling portion 354 is positioned opposite the engaging recess 353 so that the connection portion 369 can be coupled. The connection portion coupling portion 354 also has a non-circular section, and is provided with a pin hole 371, to which a pin 361 is coupled to prevent the connection portion 369 from detaching.

The connection portion 369, which is connected to the second body, for example, has a coupling hole 370 of a non-circular section to be coupled to the connection portion coupling portion 354. The connection portion 369 is mounted on the second rotation shaft 351 by a pin 361, which is coupled to the pin hole 371.

The second rotation member 350 has an engaging member 352 on an end, and the engaging member 352 has a first direction rotation constraint protrusion 355 and a second direction engaging portion 356.

The first direction rotation constraint protrusion 355 is inserted into the first direction rotation prevention recess 313 and prevents the first rotation member 330 from rotating in the first direction when the second rotation member 350 has rotated a predetermined angle in the second direction.

The second direction rotation prevention engaging portion 356, which is integral with the first direction rotation constraint protrusion 355, also plays the role of an engaging portion 356, which engages with the edge 312 outside the rotation limitation recess 311 of the rotation support portion 310 facing the second rotation member 350 and prevents the second rotation member 350 from rotating in the second direction once the first rotation member 330 is rotated and unfolded at least a predetermined angle in the first direction.

By removing a part of the edge 312 corresponding to the position of the first direction rotation constraint protrusion 355 when the first rotation member 330 is fully unfolded in the first direction, the second rotation member 350 can be unfolded in the second direction when the first rotation member 330 is unfolded in the first direction. In addition, removal of the edge 312 up to a predetermined angle enables the first rotation member 330 to unfold in the first direction when the second rotation member 350 is unfolded in the second direction.

The first direction rotation constraint protrusion 355 also plays the role of a first direction engaging protrusion 355a, which interacts with the first direction rotation limitation recess 311 (described later) and limits the angle of rotation in the first direction.

That is, according to the present embodiment, one side of the engaging member 352 plays the triple role of the first direction rotation constraint protrusion 355, the first direction engaging protrusion 355a, and the engaging portion 356.

A ball guide portion 358 is formed along the outer peripheral surface of the engaging member 352 up to a predetermined angle, and recesses are formed on both ends of the ball guide portion 358 to be deeper than the ball guide portion 358 so that a second direction engaging step 359 is formed. This is for the purpose of limiting the unfolding angle of the second rotation member 350 within a predetermined range. The engaging member 352 has a mounting hole 360 formed in a non-circular section so that it is coupled to and rotates together with the second rotation shaft 351.

After the second rotation shaft 351 of the second rotation member 350 is inserted into the second rotation shaft coupling hole 336 formed on the rotation body 335, the outer peripheral surface of the pin 340, which engages with the engaging recess 353, prevents the second rotation shaft 351 from detaching from the second rotation shaft coupling hole 336.

As shown, a rotation limitation recess 311 is formed on the lateral surface of the rotation support portion 310 to interact with the first direction engaging protrusion 355a and limit the angle of the first rotation member 330 rotated and unfolded in the first direction. The rotation support portion 310 has a first rotation shaft coupling hole 315, into which the first rotation shaft 331 is inserted and coupled.

The first and second cams 380 and 390 are coupled to the first rotation shaft 331 and engage with each other while being supported by the elastic member 330.

As mentioned above, the dual direction opening/closing hinge module according to the present invention can be advantageously used for an apparatus (e.g. cellular phone, PDA, PMP, electronic organizer, electronic calculator, game machine) so that the second body (e.g. display) of the apparatus can be folded/unfolded in two directions in a folder type with regard to the first body (e.g. main unit) of the apparatus.

The inventive hinge module can also be used as a component of a conventional machine, which requires rotations in two directions.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A dual direction opening/closing hinge module for supporting an apparatus so that a second body of the apparatus can be folded/unfolded in first and second directions with regard to a first body of the apparatus, the dual direction opening/closing hinge module comprising:
a first rotation member having a first rotation shaft to be installed on the first body while being able to rotate in the first direction, and a rotation body formed on a side of the first rotation shaft; and
a second rotation member having a second rotation shaft installed on the rotation body while being able to rotate in the second direction so that the second body is supported while being able to rotate in the second direction.

2. The dual direction opening/closing hinge module as claimed in claim 1, wherein the first rotation member has a support shaft or a second rotation shaft support portion arranged at an angle with regard to the first rotation shaft to support the second rotation shaft while being able to rotate in the second direction, the second rotation member is rotatably installed on the first rotation member in the first type, that is, the second rotation member is rotatably installed on the support shaft via the second rotation shaft or in the second type, that is, the second rotation member is rotatably installed via the second rotation shaft inserted into the second rotation shaft support portion.

3. The dual direction opening/closing hinge module as claimed in claim 1, further comprising:
a first cam having a first cam portion on a surface so that the first cam is coupled to the first rotation shaft while being able to slide and allows the first rotation shaft to rotate;
a second cam having a second cam portion engaging with the first cam portion to be coupled to the first rotation shaft so that, when the first rotation shaft rotates, the second cam rotates together with the first rotation shaft and slide the first cam;
an elastic member for elastically pushing the first cam or the second cam in such a direction that the first and second cams engage with each other; and
a rotation support portion to be installed on the first body, the rotation support portion having a first rotation shaft coupling hole so that the first rotation shaft can be rotatably coupled, a first cam receiving portion for allowing the first cam to slide along the first rotation shaft but not to rotate, and an elastic member receiving recess for receiving the elastic member.

4. The dual direction opening/closing hinge module as claimed in claim 1, further comprising:
a first cam having a first cam portion on a surface so that the first cam is coupled to the first rotation shaft while being able to slide, the first cam rotating together with the first rotation shaft when the first rotation shaft rotates;
a second cam having a second cam portion engaging with the first cam portion to be coupled to the first rotation shaft so that the second cam allows the first rotation shaft to rotate and slides the first cam rotating together with the first rotation shaft;
an elastic member for elastically pushing the first cam or the second cam in such a direction that the first and second cams engage with each other; and
a rotation support portion to be installed on the first body, the rotation support portion having a first rotation shaft coupling hole so that the first rotation shaft can be rotatably coupled, a second cam receiving portion for receiving the second cam so that the second cam is not allowed to rotate, and an elastic member receiving recess for receiving the elastic member.

5. The dual direction opening/closing hinge module as claimed in claim 1, wherein the dual direction opening/closing hinge module further comprises a rotation support portion having a first rotation shaft coupling hole so that the first rotation shaft can be rotatably coupled,
a first direction rotation prevention recess is formed on a lateral surface of the rotation support portion, the lateral surface facing the second rotation member, and a first direction rotation constraint protrusion is formed on the second rotation member and is inserted into the first direction rotation prevention recess to prevent the first rotation member from rotating in the first direction when the second rotation member is folded or when the second rotation member is rotated and unfolded in the second direction.

6. The dual direction opening/closing hinge module as claimed in claim 1, wherein the dual direction opening/closing hinge module further comprises a rotation support portion having a first rotation shaft coupling hole so that the first rotation shaft can be rotatably coupled, and
a second direction rotation prevention engaging portion is formed either on a first lateral surface of the rotation support portion facing the second rotation member when the first rotation member is rotated and unfolded in the first direction or on a corresponding surface of the second rotation member so that the second direction rotation prevention engaging portion engages with a facing second lateral surface and prevents the second rotation member from rotating in the second direction.

7. The dual direction opening/closing hinge module as claimed in claim 3 or 4, wherein a first direction rotation prevention recess is formed on a lateral surface of the rotation support portion, the lateral surface facing the second rotation member, a first direction rotation constraint protrusion is formed on the second rotation member and is inserted into the first direction rotation prevention recess to prevent the first rotation member from rotating in the first direction when the second rotation member is rotated and unfolded in the second direction, and the first direction rotation constraint protrusion is formed as an engaging portion by plane-cutting a side of an annular protrusion protruding from an outer peripheral surface so that when the second rotation member is folded, the engaging portion allows the first rotation member to rotate in the first direction, and when the first rotation member is unfolded in the first direction, the engaging portion engages with the lateral surface of the rotation support portion and prevents the second rotation member from rotating in the second direction.

8. The dual direction opening/closing hinge module as claimed in claim 5, wherein a compression member is installed in the first direction rotation prevention recess to compress/contact an outer peripheral surface of the first direction rotation constraint protrusion, a spring is installed in the first direction rotation prevention recess to elastically support the compression member, and an angle adjustment planar portion is formed on the outer peripheral surface of the first direction rotation constraint protrusion to make a surface contact with the compression member so that an unfolding angle can be adjusted.

9. The dual direction opening/closing hinge module as claimed in claim 5, wherein a first direction rotation limitation recess is formed on a lateral surface of the rotation support portion, the lateral surface facing the rotation body, or on a facing surface of the rotation body to limit an angle of the first rotation member rotated and unfolded in the first direction, a first direction engaging protrusion is formed on the facing surface of the rotation body or on the lateral surface to engage with the first direction rotation limitation recess, and
a second direction engaging portion is formed on an outer peripheral surface of the second rotation member to engage with a second direction engaging step formed on the first rotation member to limit an angle of the second rotation member unfolded in the second direction.

10. The dual direction opening/closing hinge module as claimed in claim 9, wherein the second direction engaging step is a ball elastically supported by a spring installed in a recess formed on the rotation body, and the second direction engaging portion is a recess formed on both ends of a ball guide portion formed along an outer peripheral surface of the first direction engaging protrusion.

11. The dual direction opening/closing hinge module as claimed in claim 10, wherein the first direction rotation constraint protrusion and the second direction rotation prevention engaging portion are installed on an engaging member adapted to attach to/detach from the second rotation shaft, an engaging member mounting recess is formed on the rotation body, the engaging member has a shaft coupling hole of a non-circular section, and the engaging member is coupled to an outer peripheral surface of the second rotation shaft while being rotatably mounted in the engaging member mounting recess.

12. The dual direction opening/closing hinge module as claimed in claim 3 or 4, wherein an axial movement cam portion is formed on an outer peripheral surface of the second rotation member so that, when the second rotation member is rotated in the second direction, the axial movement cam portion contacts the rotation support portion and pulls the first rotation shaft of the first rotation member by means of an increase in radius,
a first rotation shaft rotation prevention portion is formed on the rotation support portion, and
a rotation prevention operation portion is formed on one of the first rotation shaft or the first or second cam rotating together with the first rotation shaft so that, when the first rotation shaft is pulled and axially moved by the axial movement cam portion, the rotation prevention operation portion is coupled to the first rotation shaft rotation prevention portion to allow the first rotation shaft to axially move and prevent the first rotation shaft from rotating in the first direction while the first rotation member is unfolded in the second direction, the rotation prevention operation portion escaping from the first rotation shaft rotation prevention portion by means of an axial movement of the first rotation shaft returning to an original position due to action of the elastic member when the second rotation member is folded so that the first rotation shaft is allowed to rotate in the first direction when the second rotation member is folded.

13. The dual direction opening/closing hinge module as claimed in claim 12, wherein the rotation prevention operation portion is adapted to rotate together with the first rotation shaft and deviate from the first rotation shaft rotation prevention portion when the first rotation shaft rotates in the first direction while the second rotation member is folded so that the first rotation shaft is prevented from axially moving while the first rotation member is unfolded, and the axial movement cam portion consequently engages with the rotation support portion and prevents the second rotation member from rotating in the second direction.

14. The dual direction opening/closing hinge module as claimed in claim 2, wherein the second rotation member is rotatably installed on the first rotation member in the first type, and the first rotation member is formed by bending an identical metal rod in a first rotation shaft direction and in a second rotation shaft direction to form the first rotation shaft and the support shaft and by integrally forming a plastic rotation body on an outer peripheral surface of a bent region between the first rotation shaft and the support shaft by insert injection molding to obtain a single component.

15. The dual direction opening/closing hinge module as claimed in claim 2, wherein the second rotation member is rotatably installed on the first rotation member in the second type, the second rotation shaft support portion is formed on the rotation body as a through-hole, and the second rotation shaft is inserted into the second rotation shaft support portion and rotatably installed.

16. The dual direction opening/closing hinge module as claimed in claim 5, wherein the first direction rotation prevention recess is formed in one or both positions corresponding to the first direction rotation constraint protrusion when the first rotation member is folded and when the first rotation member is unfolded, respectively.

17. A dual direction opening/closing apparatus comprising:
a first body;
a second body; and
a dual direction opening/closing hinge module as claimed in one of claims 1-6, 8-11, and 14-16 installed between the first and second bodies so that the second body can be folded/unfolded in first and second directions with regard to the first body.
